(19) Europäisches Patentamt
European Patent Office
Office européen des brevets

(11) **EP 4 445 105 B1**

(12) **EUROPEAN PATENT SPECIFICATION**

(45) Date of publication and mention of the grant of the patent:
**11.03.2026 Bulletin 2026/11**

(21) Application number: **22844001.2**

(22) Date of filing: **08.12.2022**

(51) International Patent Classification (IPC):
**G01G 3/14** *(2006.01)*    **G01G 23/01** *(2006.01)*

(52) Cooperative Patent Classification (CPC):
**G01G 3/1414; G01G 23/01**

(86) International application number:
**PCT/CN2022/137455**

(87) International publication number:
**WO 2023/104135 (15.06.2023 Gazette 2023/24)**

(54) **TILT COMPENSATION APPARATUS AND TILT COMPENSATION METHOD THEREFOR**

NEIGUNGSKOMPENSATIONSVORRICHTUNG UND VERFAHREN ZUR NEIGUNGSKOMPENSATION

DISPOSITIF DE COMPENSATION DE L'INCLINAISON ET PROCÉDÉ DE COMPENSATION DE L'INCLINAISON

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.12.2021 CN 202111504899**

(43) Date of publication of application:
**16.10.2024 Bulletin 2024/42**

(73) Proprietors:
• **Mettler-Toledo (Changzhou) Precision Instruments Co., Ltd**
  **Changzhou, Jiangsu 213125 (CN)**
• **Mettler Toledo (Changzhou) Measurement Technology Ltd.**
  **Changzhou, Jiangsu 213125 (CN)**
• **Mettler-Toledo International Trading (Shanghai) Co., Ltd.**
  **Shanghai 200131 (CN)**

(72) Inventors:
• **WU, Jianwei**
  **Changzhou, Jiangsu 213125 (CN)**
• **LIN, Hongzhi**
  **Changzhou, Jiangsu 213125 (CN)**
• **FANG, Chao**
  **Changzhou, Jiangsu 213125 (CN)**
• **WANG, Jifeng**
  **Changzhou, Jiangsu 213125 (CN)**

(74) Representative: **Mettler-Toledo**
**IP Department**
**Im Langacher 44**
**8606 Greifensee (CH)**

(56) References cited:
**EP-A1- 1 985 977      EP-A1- 2 246 675
TW-A- 200 918 871**

**Description**

**Technical Field**

The present invention relates to the field of dynamic weighing technologies, and in particular, to a tilt compensation apparatus and a tilt compensation method therefor.

**Background Art**

Column-type digital load cells are widely used in vehicle weighing scales, axle load scales, platform scales, large tank scales, and other application scenarios. These application scenarios all belong to multi-point application, where one weighing system is equipped with three, four, eight, or multiple number of column-type load cells. The column-type load cells are connected through a CAN, an RS485, or other type of bus connectors to a terminal, and the terminal displays weight data of the weighing system to users. Before initiating normal operation of the load cell for a particular application, the terminal performs addressing, zero-point and sensitivity calibration of the load cell, and adjusts the angle difference, and then the load cell can perform normal weighing.

In addition to transmitting a weight signal to the terminal, each column-type load cell transmits other characteristic signals, such as temperature, humidity, gas concentration, and tilt angle signals to the terminal for display, and the user can monitor the environment and status of the column-type load cell based on these information.

The weighing system may eventually provide inaccurate results due to improper status of the column-type load cell such as not being in a vertical state in a process after being installed on a vehicle weight scale, the column-type load cell is tilted in an application process due to a status change (tilting) of the column-type load cell or a large day and night temperature difference (the foundation and the weighing platform have different dilatation coefficients), the column-type load cell is tilted due to settlement of the foundation after long-term use of the weighing system, etc.

Large tank scales also perform inaccurate weighing due to the tilting of the column-type load cell during installation or use.

In the existing technical solutions, a current tilt angle of the load cell can be obtained by using an accelerometer or a tilt angle sensor, and then an algorithm is designed to correct a weight error caused by the tilting, so that the weighing accuracy can be maintained even in a tilted state. For example, the solutions disclosed in the Chinese application for patent CN 102778287 A are only applicable to horizontal tilt of commercial scales, and this technology is not applicable to the application of a vehicle scale on which a digital load cell is vertically installed. The algorithms and methods mentioned in this patent application are only applicable to tilt compensation for beam-type load cells, and are not applicable to column-type load cells where the application scenarios are more complex and severe.

EP 2 246 675 A1 provides a weighing apparatus comprising a load cell and an inclinometer and a method of weighing with and calibrating the weighing apparatus that tilt compensates for component parts of load cell readings that vary according to different relationships with load cell inclination. The present invention further provides a weighing apparatus and method of weighing with and calibrating the weighing apparatus that compensates for residual errors in a measured weight that has been pre-compensated for load cell inclination. EP 1 985 977 A1 discloses a platform on which an object to be weighed is placed, a weight measurer for outputting weight data indicating an apparent weight value of the object to be weighed, and an acceleration sensor for measuring components of the gravitational acceleration exerted on the weighing scale. The digital load cell of TW 2009 18 871 A is capable of reporting and compensating the influence caused by a gravity-tilting axis, in which at least a load sensing cell, a tilt angle sensing component, a memory unit, a calibration and tilt compensation computing unit and a data transmission interface unit are disposed.

**Summary of invention**

In view of the above problems in the prior art, the present invention proposes a tilt compensation apparatus and a tilt compensation method therefor, which can provide accurate tilt compensation for a weighing system.

Specifically, the present invention proposes a tilt compensation method applicable to a weighing system having a column-type load cell, including the steps of:

- S1: performing a tilt angle calibration and a horizontal rotation angle calibration on the column-type load cell of the weighing system.

- S2: aligning the column-type load cell according to a specified tilt angle and a specified horizontal rotation angle, and measuring a weight, a tilt angle, and a horizontal rotation angle under load.

In other words, the column-type load cell is tilted in a specific manner, in particular a specific manner that is given by the specified tilt angle and the specified horizontal rotation angle, and a weighing value, a tilt angle and a horizontal rotation angle is measured for a load, this means when a load is applied on the column-type load cell aligned (tilted) according to the specified tilt angle and the specified horizontal rotation angle.

The applied load may be zero load. However, in embodiments, S2 comprises measuring weights, tilt angles, and horizontal rotation angles under different loads, wherein at least one load is not zero.

The specified tilt angle and the specified horizontal rotation angle may be specified in the sense that they are selected to put the column-type load cell in combination with the applied load in a specific state, in particular a state that is favorable for assessing the influence of misalignment (tilt). For example, the specified tilt angle and the specified horizontal rotation angle may be specified in combination with the applied load in the sense that they are selected to obtain, this means to cause the measurement of, a specific weight value, a specific tilt angle, and a specific horizontal rotation angle.

In many embodiments and applications, it is not sufficient to align the column-type load cell according to one specified tilt angle and one specified horizontal rotation angle, and measuring weight, tilt angle, and horizontal rotation angle under one load or different loads. Rather, S2 comprises in many embodiments aligning the column-type load cell according to different specified tilt angles and different specified horizontal rotation angles, and measuring weights, tilt angles, and horizontal rotation angles under different loads.

In such embodiments, the different specified tilt angles, the different specified horizontal rotation angles, and the different loads may be selected such that an equal distribution of measurement configurations is generated. Examples of specified tilt angles, specified horizontal rotation angles and loads that lead to an equal distribution of measurement configurations are given further below.

- S3: calculating a weight compensation value based on the specified tilt angle or, as the case may be, specified tilt angles, and the specified horizontal rotation angle, or, as the case may by, specified horizontal rotation angles, as well as the measured weight(s), tilt angle(s), and horizontal rotation angle(s).

In embodiments, in which S2 comprises aligning the column-type load cell according to different specified tilt angles and different specified horizontal rotation angles, and measuring weights, tilt angles, and horizontal rotation angles under different loads, S3 comprises aligning the column-type load cell according to the different specified tilt angles and the different specified horizontal rotation angles, applying the different loads to each of these alignments and measuring weight, tilt angle, and horizontal rotation angle for each of the resulting configurations.

In other words, the weight, tilt angle, and horizontal rotation angle is measured for each alignment of the column-type load cell and for each load.

- S4: calculating an actual, this means compensated, weighing weight based on an actual measured weight of the weighing system and the weight compensation value.

According to the present invention, in step S1, the tilt angle calibration is performed by using an accelerometer or a tilt angle sensor, and the horizontal rotation angle calibration is performed using a magnetometer.

According to an embodiment of the present invention, in step S1, the tilt angle calibration is performed by using an accelerometer and performing the tilt angle calibration by using the accelerometer includes the steps of:

T1: obtaining three-axis acceleration outputs $A_{X0}$, $A_{Y0}$, and $A_{Z0}$, and calculating spherical coordinates $\theta$, $\varphi$, and $\text{ø}$, of a current alignment ("tilt state") using the following equation:

$$\theta = \tan^{-1}\left(\frac{A_{Y0}}{\sqrt{A_{X0}^2 + A_{Z0}^2}}\right);$$

$$\varphi = \tan^{-1}\left(\frac{A_{X0}}{\sqrt{A_{Y0}^2 + A_{Z0}^2}}\right);$$

$$\text{ø} = \tan^{-1}\left(\frac{\sqrt{A_{Y0}^2 + A_{X0}^2}}{A_{Z0}}\right);$$

T2: calculating a rotation matrix by substituting $\theta$, $\varphi$, and $\text{ø}$ in the following equation:

$$M = \begin{pmatrix} \cos\emptyset & \sin\emptyset & 0 \\ -\sin\emptyset & \cos\emptyset & 0 \\ 0 & 0 & 1 \end{pmatrix} \begin{pmatrix} \cos\varphi & 0 & -\sin\varphi \\ 0 & 1 & 0 \\ \sin & 0 & \cos\varphi \end{pmatrix} \begin{pmatrix} 1 & 0 & 0 \\ 0 & \cos\theta & \sin\theta \\ 0 & -\sin\theta & \cos\theta \end{pmatrix};$$

T3: multiplying the obtained three-axis acceleration outputs $A_X$, $A_Y$, and $A_Z$ by the rotation matrix to obtain three-axis acceleration outputs $A'_X$, $A'_Y$, and $A'_Z$ in an geodetic coordinate system;

$$\begin{pmatrix} A'_X \\ A'_Y \\ A'_Z \end{pmatrix} = M * \begin{pmatrix} A_X \\ A_Y \\ A_Z \end{pmatrix};$$

and

T4: calculating a roll value, a pitch value, and a yaw value based on the three-axis acceleration outputs $A'_X$, $A'_Y$, and $A'_Z$.

According to an embodiment of the present invention, S2 comprises aligning the column-type load cell according to different specified tilt angles and different specified horizontal rotation angles, wherein the specified tilt angles are 0°, 1°, 2°, and 3°, the specified horizontal rotation angles are 0°, 90°, 180°, and 270°, and the applied loads are zero, 1/2 full load, and full load. As mentioned above, the weight value, tilt angle, and horizontal rotation angle may then be measured for each alignment of the column-type load call and for each load, for example by traversing through the different configurations to obtain the corresponding weights, tilt angles, and horizontal rotation angles.

According to an embodiment of the present invention, in step S3, the weight compensation value includes a tilt error compensation value E1 and a rotation angle error compensation value E2, and the calculation formula used is:

$$E_1 = \frac{a_1*(1+\cos\ )}{\cos r +\ _1*k*(1-\cos r)} + \frac{a_2*(1+\cos\ )}{\cos p + c_2*k*(1-\cos p)};$$

$$E_2 = (b_0 + b_1 * \sin\vartheta + b_2 * \sin\vartheta^2);$$

where r denotes a roll value, p denotes a pitch value, $\vartheta$ denotes a horizontal rotation angle, $a_1$ and $c_1$ denote distribution coefficients of the roll value, $a_2$ and $c_2$ denote distribution coefficients of the pitch value, k denotes a structural coefficient of the column-type load cell, and $b_0, b_1, b_2$ denote rotation angle error compensation values.

According to an embodiment of the present invention, a calculation formula for the compensated weighing weight is:

$$W_c = \frac{W + E_2}{1 + E_1/10^6};$$

where $W_c$ denotes the compensated weighing weight, and W denotes the actual measured weight.

According to an embodiment of the present invention, before step S4 is performed, the weight compensation value is verified.

The present invention further provides a tilt compensation apparatus applicable to a weighing system having a column-type load cell, including:

- A calibration module configured to perform a tilt angle calibration and a horizontal rotation angle calibration on the column-type load cell of the weighing system to obtain calibration data, such as a rotation matrix M.

- A test module configured for selecting, in particular by a user, a set specified tilt angle and a set specified horizontal rotation angle, and for obtaining a weight, tilt angle, and horizontal rotation angle measured under load.

In other words, the test module is configured to select a specified tilt angle and a specified horizontal rotation angle, wherein the column-type load cell is aligned (tilt) according to this specified tilt angle and this specified horizontal rotation angle.

Additionally, the test module may be configured to select the load applied to the column-type load cell.

- A compensation value calculation module configured for calculating a weight compensation value based on the weight, tilt angle, and horizontal rotation angle obtained by the test module.

- A weighing calculation module configured for calculating an actual weighing weight, this means a compensated weight value, based on an actual measured weight of the weighing system and the weight compensation value.

According to the present invention, the test module is configured for selecting different set specified tilt angles and different set specified horizontal rotation angles and for obtaining weights, tilt angles, and horizontal rotation angles measured under different loads.

In particular, the test module may be configured to select the specified tilt angles 0°, 1°, 2°, and 3°, the specified horizontal rotation angles 0°, 90°, 180°, and 270°, and the loads zero, 1/2 full load, and full load.

In an embodiment, the test module is configured to select a set specified tilt angle, a set specified horizontal rotation angle, and a set load, to obtain a weight, a tilt angle, and a horizontal rotation angle, and to traverse all the specified tilt angles, specified horizontal rotation angles, and loads to obtain the corresponding weights, tilt angles, and horizontal rotation angles.

In other words, the test module is configured to transverse all selected or selectable tilt angles, horizontal rotation angles, and loads to obtain the corresponding weights, tilt angles, and horizontal rotation angles.

According to an embodiment of the present invention, the tilt compensation apparatus further includes a verification module configured to verify the weight compensation value calculated by the compensation value calculation module.

According to the tilt compensation apparatus and the tilt compensation method therefor provided in the present invention, the actual measured weight is corrected based on the obtained weight compensation value, thereby providing accurate tilt compensation for the weighing system.

It should be understood that the above general description and the following detailed description of the present invention are both exemplary and illustrative, and are intended to provide further explanations for the present invention.

**Brief description of drawings**

The accompanying drawings are included to provide a further understanding of the present invention and are incorporated in and constitute a part of the present application, show the embodiments of the present invention, and serve together with the description, explain the principles of the present invention. In the accompanying drawings:

Fig. 1   is a flowchart of a tilt compensation method according to an embodiment of the present invention
Fig. 2   is a schematic structural diagram of a tilt compensation apparatus according to an embodiment of the present invention

Description of embodiments

It should be noted that, in the case of no conflict, the embodiments and the features thereof in the present application can be combined with each other.

The technical solutions of the present application will be clearly and completely described below in conjunction with the drawings in the embodiments of the present application. Apparently, the described embodiments are merely some rather than all the embodiments of the present application. The following description of at least one exemplary embodiment is merely illustrative, and in no way serves as any limitation on the present application and application or use thereof. All other embodiments derived by those of ordinary skill in the art based on the embodiments of the present application without creative efforts fall within the protection scope of the present application. It should be noted that the terms used herein are merely for describing specific implementations and are not intended to limit the exemplary implementations according to the present application. As used herein, unless the context clearly indicates otherwise, the singular forms are intended to include the plural forms as well. Moreover, it should also be understood that when the terms "include(s)" and/or "comprise(s)" are used in the description, it indicates the presence of features, steps, operations, devices, components, and/or combinations thereof.

Unless specifically stated otherwise, the relative arrangement of components and steps, numerical expressions and numerical values set forth in these embodiments do not limit the scope of the present application. In addition, it should be understood that for ease of description, the sizes of various parts shown in the drawings are not drawn to scale. The technologies, methods, and devices known to those of ordinary skill in the related art may not be discussed in detail, but where appropriate, the technologies, methods, and devices should be regarded as part of the authorization specification. In all examples shown and discussed here, any specific value should be interpreted as merely exemplary and not as limiting. Therefore, other examples of the exemplary embodiment may have different values. It should be noted that similar reference signs and letters refer to similar items in the following drawings. Therefore, once a specific item is defined in one of the drawings, it need not be further discussed in subsequent drawings.

In the description of the present application, it should be understood that an orientation or position relationship indicated by orientation terms such as "front, rear, upper, lower, left, and right", "transverse, longitudinal, vertical, and horizontal", and "top and bottom" is usually based on an orientation or position relationship shown in the drawings, which is only for the convenience of describing the present application and simplifying the description. Unless otherwise stated, these orientation terms do not indicate or imply that an apparatus or element referred to must have a specific orientation or be constructed and operated in a specific orientation, so that the orientation terms cannot be understood as a limitation of the protection scope of the present application; and the orientation terms "inner and outer" refer to the inside and outside relative to the contour of each component itself.

For convenience of description, spatially relative terms such as "on", "above", "on the top surface", and "upper" can be used herein to describe a spatial position relationship between a device or a feature shown in the figure and other devices or features. It should be understood that spatially relative terms are intended to include different orientations in use or operation in addition to the orientation of the device described in the figure. For example, if the device in the figure is inverted, the device described as "on other devices or structures" or "above other devices or structures" will then be positioned as "under other devices or structures" or "below other devices or structures". Therefore, the exemplary term "above" may include two orientations "above" and "below". The device may also be positioned in other different manners (rotated by 90 degrees or in other orientations), and spatially relative description used here is explained accordingly.

In addition, it should be noted that the use of words such as "first" and "second" to define parts is merely for the convenience of distinguishing between corresponding parts. Unless otherwise stated, the above words have no special meaning and therefore cannot be understood as limitation of the protection scope of the present application. Furthermore, although the terms used in the present application are selected from well-known common terms, some of the terms mentioned in the specification of the present application may have been selected by the applicant according to his or her determination, and the detailed meaning thereof is described in the relevant section herein. Furthermore, the present application must be understood, not simply by the actual terms used but also by the meanings encompassed by each term.

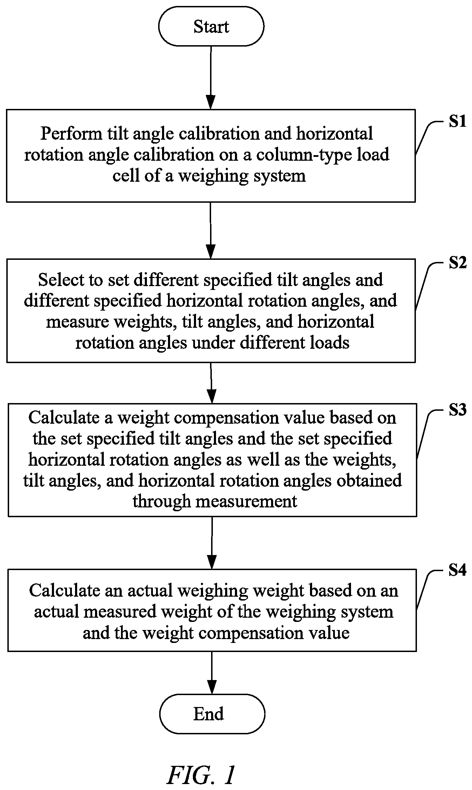

FIG. 1 is a flowchart of a tilt compensation method according to an embodiment of the present invention. As shown in the figure, the tilt compensation method for a weighing system having a column-type load cell, including the steps of:

S1: performing a tilt angle calibration and a horizontal rotation angle calibration on a column-type load cell of a weighing system, where a tilt angle is used to represent an included angle formed between a length direction and a gravitational acceleration direction of the column-type load cell, and a horizontal rotation angle is used to represent a rotation angle of the column-type load cell around the gravitational acceleration direction.;

S2: selecting a specific set of tilt angles and a specific set of horizontal rotation angles to set the weighing system at the specific set of tilt angles and the specific set of horizontal rotation angles, and performing measurement to obtain a corresponding set of weight values, tilt angle values, and horizontal rotation angle values under different set of loads;

S3: calculating a weight compensation value based on the specific set of tilt angles and the specific set of horizontal rotation angles, and the corresponding set of weight values, tilt angle values, and horizontal rotation angle values obtained through measurement; and

S4: calculating a compensated weighing weight based on an actual measured weight of the weighing system and the weight compensation value.

Preferably, in step S1, the tilt angle calibration is performed by using an accelerometer or a tilt angle sensor, and the horizontal rotation angle calibration is performed by using a magnetometer. A three-axis accelerometer or a two-axis or three-axis tilt angle sensor may be selected as the accelerometer. A two-axis magnetic sensor may be selected as the magnetometer and used with a magnet. The magnet is installed on an inner side of the column-type load cell. The accelerometer, tilt angle sensor, and magnetometer may be designed as independent modules to be installed inside or outside of the column-type load cell, or may be integrated onto the mainboard of the column-type load cell in an integrated design manner.

Preferably, the step of performing the tilt angle calibration by using an accelerometer includes steps of:

T1: obtaining three-axis acceleration outputs $A_{X0}$, $A_{Y0}$, and $A_{Z0}$, and calculating $\theta$, $\varphi$, and $\o$ using the following equation. For the tilt angle calibration, X-, Y-, and Z-axis origin coordinates ($A_{X0}$, $A_{Y0}$, $A_{Z0}$) of output accelerations of the column-type load cell in a vertical state are first obtained, then the included angle $\theta$ between the horizontal plane and the X axis is calculated, the angle $\phi$ between the horizontal plane and the Y axis is calculated, and the angle $\o$

between a gravity vector and the Z axis is calculated, where θ represents a pitch angle, φ represents a roll angle, and ø represents a yaw angle.

$$\theta = tan^{-1}\left(\frac{A_{Y0}}{\sqrt{A_{X0}^2 + A_{Z0}^2}}\right);$$

$$\varphi = tan^{-1}\left(\frac{A_{X0}}{\sqrt{A_{Y0}^2 + A_{Z0}^2}}\right)$$

$$\emptyset = tan^{-1}\left(\frac{\sqrt{A_{Y0}^2 + A_{X0}^2}}{A_{Z0}}\right);$$

T2: calculating a rotation matrix. The rotation matrix is a matrix that, when multiplied by a vector, has the effect of changing the direction of the vector but not changing the size and maintaining chirality. The rotation matrix does not include point inversion, which may change the chirality, that is, change the right-handed coordinate system to the left-handed coordinate system or vice versa. Rotation may be divided into active rotation and passive rotation. Active rotation is counterclockwise rotation of the vector about the rotation axis. Passive rotation is counterclockwise rotation of the coordinate axis itself, which is equivalent to an inverse operation of the active rotation.

$$M = \begin{pmatrix} cos\emptyset & sin\emptyset & 0 \\ -sin\emptyset & cos\emptyset & 0 \\ 0 & 0 & 1 \end{pmatrix} \begin{pmatrix} cos\varphi & 0 & -sin\varphi \\ 0 & 1 & 0 \\ sin\varphi & 0 & cos\varphi \end{pmatrix} \begin{pmatrix} 1 & 0 & 0 \\ 0 & cos\theta & sin\theta \\ 0 & -sin & cos\theta \end{pmatrix};$$

T3: multiplying the obtained three-axis acceleration outputs $A_X$, $A_Y$, and $A_Z$ by the rotation matrix to obtain three-axis acceleration outputs $A_X'$, $A_Y'$, and $A_Z'$ in an actual coordinate system, that is, the current coordinate system is converted into the system coordinate system (geodetic coordinate system) by the rotation matrix.

$$\begin{pmatrix} A_X' \\ A_Y' \\ A_Z' \end{pmatrix} = M * \begin{pmatrix} A_X \\ A_Y \\ A_Z \end{pmatrix};$$

T4: calculating a roll value, a pitch value, and a yaw value based on the three-axis acceleration outputs $A_X'$, $A_Y'$, and $A_Z'$.

Preferably, in step S2, setting the weighing system at the specific set of tilt angles such as 0°, 1°, 2°, and 3°, and at the specific set of horizontal rotation angles such as 0°, 90°, 180°, and 270°, and performing measurement under different set of loads such as a zero load, a half load, and a full load; where ; it is easy to understand that the column-type load cell is fully loaded when it enters a working state in which it has a rated voltage and has a rated current flowing through it; and obtaining the corresponding set of weight values, tilt angle values, and horizontal rotation angle values.

It should be noted that, as an example rather than a limitation, the specific set of tilt angles selected may alternatively be 0°, 1.5°, and 3°, or other values which is optional. Similarly, the specific set of horizontal rotation angles selected may alternatively be 0°, 60°, 120°, 180°, 240°, and 300°. The loads selected may be zero, a one-third of full load, a two-thirds of full load, and a full load. According to actual requirements, more optional values for the specific set of tilt angles, horizontal rotation angles and different loads may be selected.

Preferably, in step S3, the weight compensation value includes a tilt error compensation value E1 and a rotation angle error compensation value E2, and a calculation formula used is:

$$E_1 = \frac{a_1 * (1 + cosr)}{cosr + {}_1 * k * (1 - cos)} + \frac{a_2 * (1 + cosp)}{cosp + {}_2 * k * (1 - cosp)};$$

$$E_2 = (b_0 + b_1 * sin\vartheta + b_2 * sin\vartheta^2);$$

where $r$ denotes a roll value, p denotes a pitch value, $\vartheta$ denotes a horizontal rotation angle, $a_1$ and $c_1$ denote distribution coefficients of the roll value, $a_2$ and $c_2$ denote distribution coefficients of the pitch value, k denotes a structural coefficient of the column-type load cell, and $b_0$, $b_1$, $b_2$ denote rotation angle error compensation values. The rotation angle error compensation values $b_0$, $b_1$, $b_2$ are obtained by fitting, using the least square method, the weight and horizontal rotation angle obtained in step S2.

Preferably, a calculation formula for the compensated weighing weight is:

$$W_c = \frac{W + E_2}{1 + E_1/10^6};$$

where $W_c$ denotes the compensated weighing weight, and $W$ denotes the actual measured weight.

Preferably, before step S4 is performed, the weight compensation value is verified. It is verified whether the actual weighing weight is within a tolerance range of the set accuracy by tilting the column-type load cell vertically by any angle within 3° (a range defined in R76 regulations), then rotating horizontally by any angle, and loading any weight.

Preferably, when a status of the tilt angle of the column-type load cell exceeds a set threshold range (for example, by a tilt angle of 3° ), the weighing system does not perform a tilt compensation, that is, the weighing system does not perform a compensated weighing weight calculation, but gives alarm information and the specific tilt angle values and rotation directions of the column-type load cell to prompt a user, such that the user can quickly and accurately adjust the status of the column-type load cell to a set compensation range. When a tilt angle of the column-type load cell is within a set range of 0° to 3° , the weighing system automatically performs tilt compensation to ensure the accuracy requirements of the column-type load cell and the performance accuracy of the weighing system.

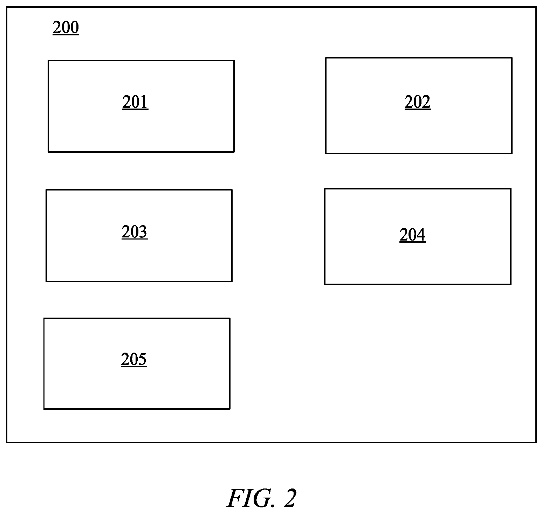

FIG. 2 is a schematic structural diagram of a tilt compensation apparatus according to an embodiment of the present invention. As shown in the figure, the present invention further provides a tilt compensation apparatus 200 applicable to a weighing system having a column-type load cell. The tilt compensation apparatus 200 includes:

  a calibration module 201 configured to perform a tilt angle calibration and a horizontal rotation angle calibration on the weighing system to obtain calibration data;

  a test module 202 for selecting and setting the weighing system at a specific set of tilt angles and a specific set of horizontal rotation angles, and obtaining a corresponding set of weight values, tilt angle values, and horizontal rotation angle values under different set of loads through measurement;

  a compensation value calculation module 203 calculating a weight compensation value based on the corresponding set of weight values, tilt angle values, and horizontal rotation angle values obtained by the test module 202; and

  a weighing calculation module 204 calculating a compensated weighing weight based on an actual measured weight of the weighing system and the weight compensation value.

Preferably, in the test module 202, the specific set of tilt angles are set to 0° , 1° , 2° , and 3° , the specific set of horizontal rotation angles are set to 0° , 90° , 180° , and 270° , and the different set of loads are set to a zero load, a half load, and a full load. All the specific set of tilt angles, the specific set of horizontal rotation angles, and different set loads are set and measurements are performed to obtain the corresponding weight values, tilt angle values, and horizontal rotation angle values.

Preferably, in the calibration module 201, the tilt angle calibration is performed by using an accelerometer or a tilt angle sensor, and the horizontal rotation angle calibration is performed by using a magnetometer.

Preferably, the tilt compensation apparatus 200 further includes a verification module 205 configured to verify the weight compensation value calculated by the compensation value calculation module 203. It is verified whether the actual weighing weight is within a tolerance range of the set accuracy by tilting the column-type load cell vertically by any angle within 3° (a range defined in R76 regulations), then rotating horizontally by any angle, and loading any weight.

According to the tilt compensation apparatus and the tilt compensation method therefor provided in the present invention, a current three-dimensional status of the column-type load cell is obtained based on the tilt angle and the horizontal rotation angle, so that service personnel can accurately and quickly locate the correct status in which the column-type load cell is to be installed, thereby ensuring the perfectly perpendicular installation and helping to ensure the accuracy of the weighing system. In addition, the status, vibration direction, motion trajectory, etc. of all column-type load cells in an application process (for different vehicles, different weights, different weighing methods, etc.) can be achieved in real time, so that an effect of tilt compensation can be better detected, and a basis for fault diagnosis can be provided or researches on multi-point weighing technologies can be performed smoothly.

The present invention further provides a computer-readable storage medium, which is a non-volatile storage medium or a non-transitory storage medium and has stored thereon computer instructions, where when the computer instructions are run, the steps corresponding to any one of the foregoing tilt compensation methods are implemented, which will not be repeated herein.

The present invention further provides a weighing system, including a memory and a processor, where the memory has stored thereon computer instructions capable of being run on the processor, and when running the computer instructions, the processor implements the steps of any one of the foregoing tilt compensation methods.

Some aspects of the tilt compensation method of the present invention may be completely executed by hardware, or may be completely executed by software (including firmware, resident software, microcode, etc.), or may be executed by a combination of hardware and software. The hardware or software described above may all be referred to as "data block", "module", "engine", "unit", "component", or "system". The processor may be one or more application-specific integrated circuits (ASIC), digital signal processors (DSP), digital signal processing devices (DSPD), programmable logic devices (PLD), field-programmable gate arrays (FPGA), processors, controllers, microcontrollers, microprocessors, or a combination thereof. In addition, various aspects of the present application may be embodied as a computer product in one or more computer-readable media, and the product includes computer-readable program code. For example, the computer-readable media may include, but are not limited to, a magnetic storage device (for example, a hard disk, a floppy disk, a tape, etc.), an optical disc (for example, a compact disc (CD), a digital versatile disc (DVD), etc.), a smart card, and a flash memory device (for example, a card, a stick, a key drive, etc.).

The computer-readable medium may include a propagation data signal containing computer program code, for example, on a baseband or as a part of a carrier. The propagation signal may take various forms, including an electromagnetic form, an optical form, etc., or a suitable combination form. The computer-readable medium may be any computer-readable medium other than a computer-readable storage medium. The medium may be connected to an instruction execution system, apparatus, or device to implement communication, propagation, or transmission of a program for use. The program code located on the computer-readable medium can be propagated through any suitable medium, including radio, a cable, a fibre-optic cable, a radio frequency signal, or a similar medium, or any combination of the foregoing media.

In addition, unless explicitly stated in the claims, the order of processing elements and sequences, the use of numbers and letters, or the use of other names in the present application are not intended to limit the order of the procedures and methods of the present application. Some of the embodiments of the present invention that are currently considered useful have been discussed in the foregoing disclosure by various examples. However, it should be understood that such details are merely for the purpose of illustration, and the appended claims are not limited to the disclosed embodiments but are intended to encompass all modifications and equivalent combinations that comply with the essence and scope of the embodiments of the present application. For example, although the system components described above can be implemented by hardware devices, they can also be implemented purely by software solutions, for example, installing the described system on an existing server or mobile device.

Similarly, it should be noted that, to simplify the disclosure of the present application to facilitate the understanding of one or more embodiments of the present application, in the foregoing description of the embodiments of the present application, various features may be sometimes incorporated into one embodiment, drawing, or the description thereof. However, such a method disclosed does not mean that the subject of the present application requires more features than those mentioned in the claims. In fact, the features of the embodiments are fewer than all the features of a single embodiment disclosed above.

In some embodiments, numbers for describing the number of compositions and attributes are used. It should be understood that such numbers used in the description of the embodiments are modified by the modifier "about", "approximately", or "substantially" **in** some examples. Unless otherwise stated, "about", "approximately", or "substantially" indicates that the number is allowed to vary by $\pm$ 20%. Correspondingly, in some embodiments, the numerical parameters used in the specification and claims are approximate values, and the approximate values can be changed according to the required characteristics of individual embodiments. In some embodiments, for the numerical parameters, the specified significant digits should be taken into consideration and a general digit reservation method should be used. Although the numerical ranges and parameters used to confirm the breadth of the ranges of the numerical parameters in some embodiments of the present application are approximate values, such numerical values need to be set as precisely as possible within a feasible range in specific embodiments.

**Reference signs list**

The drawings include the following reference numerals:

200    Tilt compensation apparatus

201     Calibration module
202     Test module
203     Compensation value calculation module
204     Weighing calculation module
205     Verification module

**Claims**

1.  A tilt compensation method applicable to a weighing system having a column-type load cell, comprising steps of:

    S1: performing a tilt angle calibration and a horizontal rotation angle calibration on the column-type load cell of the weighing system;
    S2: aligning the column-type load cell according to a specified tilt angle and a specified horizontal rotation angle, and measuring a weight, a tilt angle, and a horizontal rotation angle under load;
    S3: calculating a weight compensation value based on the specified tilt angle and the specified horizontal rotation angle as well as the measured weight, tilt angle, and horizontal rotation angle; and
    S4: calculating an actual weighing weight based on an actual measured weight of the weighing system and the weight compensation value,
    **characterized in that**
    in step S1, the tilt angle calibration is performed by using an accelerometer or a tilt angle sensor, and the horizontal rotation angle calibration is performed by using a magnetometer.

2.  The tilt compensation method according to claim 1, **characterized in that** in step S1, the tilt angle calibration is performed using an accelerometer, wherein performing the tilt angle calibration by using the accelerometer further comprises steps of:

    T1: obtaining three-axis acceleration outputs $A_{X0}$, $A_{Y0}$, and $A_{Z0}$, and calculating $\theta$, $\varphi$, and $\emptyset$ of a current alignment using the following equation:

$$\theta = \tan^{-1}\left(\frac{A_{Y0}}{\sqrt{A_{X0}^2 + A_{Z0}^2}}\right);$$

$$\varphi = \tan^{-1}\left(\frac{A_{X0}}{\sqrt{A_{Y0}^2 + A_{Z0}^2}}\right);$$

$$\emptyset = \tan^{-1}\left(\frac{\sqrt{A_{Y0}^2 + A_{X0}^2}}{A_{Z0}}\right);$$

    T2: calculating a rotation matrix by substituting $\theta$, $\varphi$, and $\emptyset$ in the following equation:

$$M = \begin{pmatrix} \cos\emptyset & \sin\emptyset & 0 \\ -\mathrm{si} & \emptyset\cos\emptyset & 0 \\ 0 & 0 & 1 \end{pmatrix} \begin{pmatrix} \cos\varphi & 0 & -\sin\varphi \\ 0 & 1 & 0 \\ \sin\varphi & 0 & \cos\varphi \end{pmatrix} \begin{pmatrix} 1 & 0 & 0 \\ 0 & \cos\theta & \sin\theta \\ 0 & -\sin\theta & \cos\theta \end{pmatrix};$$

    T3: multiplying the obtained three-axis acceleration outputs $A_X$, $A_Y$, and $A_Z$ by the rotation matrix to obtain three-axis acceleration outputs $A_X'$, $A_Y'$, and $A_Z'$ in geodetic coordinate system;

$$\begin{pmatrix} A_X' \\ A_Y' \\ A_Z' \end{pmatrix} = M * \begin{pmatrix} A_X \\ A_Y \\ A_Z \end{pmatrix};$$

    and

T4: calculating a roll value, a pitch value, and a yaw value based on the three-axis acceleration outputs $A'_X$, $A'_Y$, and $A'_Z$.

3. The tilt compensation method according to claim 1 or 2, wherein step S2 comprises aligning the column-type load cell according to different specified tilt angles and different specified horizontal rotation angles, and measuring weights, tilt angles, and horizontal rotation angles under different loads.

4. The tilt compensation method according to claim 3, **characterized in that** in step S2, the specified tilt angles are 0°, 1°, 2°, and 3°, the specific horizontal rotation angles are 0°, 90°, 180°, and 270°, and the loads are zero, a 1/2 full load, and a full load.

5. The tilt compensation method according to claim 4 or 5, wherein the weight, tilt angle, and horizontal rotation angle is measured for each alignment of the column-type load cell and for each load.

6. The tilt compensation method according to one of claims 1-5, **characterized in that** in step S3, the weight compensation value comprises a tilt error compensation value E1 and a rotation angle error compensation value E2, and a calculation formula is:

$$E_1 = \frac{a_1 * (1+\cos r)}{\cos r + c_1 * k * (1-\cos r)} + \frac{a_2 * (1+\cos p)}{\cos{}_2 * k * (1-\cos p)};$$

$$E_2 = (b_0 + b_1 * \sin\vartheta + b_2 * \sin\vartheta^2);$$

wherein r denotes a roll value, p denotes a pitch value,
$\vartheta$ denotes a horizontal rotation angle,
$a_1$ and $c_1$ denote distribution coefficients of the roll value,
$a_2$ and $c_2$ denote distribution coefficients of the pitch value,
k denotes a structural coefficient of the column-type load cell, and
$b_0$, $b_1$, $b_2$ denote rotation angle error compensation values.

7. The tilt compensation method according to claim 6, **characterized in that** a calculation formula for the compensated weighing weight is:

$$W_c = \frac{W + E_2}{1 + E_1 / 10^6};$$

wherein $W_c$ denotes the compensated weighing weight, and W denotes the actual measured weight.

8. The tilt compensation method according to one of claims 1-7, **characterized in that** before step S4 is performed, the weight compensation value is verified.

9. A tilt compensation apparatus (200) applicable to a weighing system having a column-type load cell, **characterized in that** it comprises:

a calibration module (201) configured to perform a tilt angle calibration and a horizontal rotation angle calibration on the column-type load cell of the weighing system to obtain calibration data;
a test module (202) configured for selecting a set specified tilt angle and a set specified horizontal rotation angle, and obtaining a weight, tilt angle, and horizontal rotation angle measured under load;
a compensation value calculation module (201) configured for calculating a weight compensation value based on the weight, tilt angle, and horizontal rotation angle obtained by the test module (202); and
a weighing calculation module (204) configured for calculating an actual weighing weight based on an actual measured weight of the weighing system and the weight compensation value,
**characterized in that** the test module (202) is configured for selecting different set specified tilt angles and different set specified horizontal rotation angles and for obtaining weights, tilt angles, and horizontal rotation angles measured under different loads.

10. The tilt compensation apparatus according to claim 9, **characterized in that** the test module (202) is configured to select, the specified tilt angles 0°, 1°, 2°, and 3°, the specified horizontal rotation angles 0°, 90°, 180°, and 270°, and the loads zero, 1/2 full load, and a full load.

11. The tilt compensation apparatus according to claim 9 or 10, wherein the test module (202) is configured to select a set specified tilt angle, a set specified horizontal rotation angle, and a set load, to obtain a weight, a tilt angle, and a horizontal rotation angle, and to traverse all the specified tilt angles, specified horizontal rotation angles, and loads to obtain the corresponding weights, tilt angles, and horizontal rotation angles.

12. The tilt compensation apparatus according to one of claims 9 -11, **characterized in that** it further comprises a verification module (205) configured to verify the weight compensation value calculated by the compensation value calculation module (203).

**Patentansprüche**

1. Neigungskompensationsverfahren, anwendbar auf ein Wägesystem mit einer Säulenkompressions-Wägezelle, umfassend die Schritte:

S1: Durchführen einer Neigungswinkelkalibrierung und einer Horizontalrotationswinkelkalibrierung an der Wägezelle des Wägesystems;
S2: Ausrichten der Wägezelle gemäss einem spezifizierten Neigungswinkel und einem spezifizierten Horizontalrotationswinkel, und Messen eines Gewichts, eines Neigungswinkels und eines Horizontalrotationswinkels unter Last;
S3: Berechnen eines Gewichtskompensationswertes basierend auf dem spezifizierten Neigungswinkel und dem spezifizierten Horizontalrotationswinkel sowie dem gemessenen Gewicht, Neigungswinkel und Horizontalrotationswinkel; und
S4: Berechnen eines tatsächlichen Wägegewichts basierend auf einem tatsächlichen gemessenen Gewicht des Wägesystems und dem Gewichtskompensationswert,
**dadurch gekennzeichnet, dass**
in Schritt S1 die Neigungswinkelkalibrierung unter Verwendung eines Beschleunigungsmessers oder eines Neigungswinkelsensors durchgeführt wird und die Horizontalrotationswinkelkalibrierung unter Verwendung eines Magnetometers durchgeführt wird.

2. Neigungskompensationsverfahren nach Anspruch 1, **dadurch gekennzeichnet, dass** in Schritt S1 die Neigungswinkelkalibrierung unter Verwendung eines Beschleunigungsmessers durchgeführt wird, wobei das Durchführen der Neigungswinkelkalibrierung unter Verwendung des Beschleunigungsmessers ferner die Schritte umfasst:

T1: Erhalten von Drei-Achsen-Beschleunigungsausgängen $A_{X0}$, $A_{Y0}$ und $A_{Z0}$ und Berechnen von $\theta$, $\phi$ und ø einer aktuellen Ausrichtung unter Verwendung der folgenden Gleichung:

$$\theta = \tan^{-1}\left(\frac{A_{Y0}}{\sqrt{A_{X0}^2 + A_{Z0}^2}}\right);$$

$$\varphi = \tan^{-1}\left(\frac{A_{X0}}{\sqrt{A_{Y0}^2 + A_{Z0}^2}}\right);$$

$$\emptyset = \tan^{-1}\left(\frac{\sqrt{A_{Y0}^2 + A_{X0}^2}}{A_{Z0}}\right);$$

T2: Berechnen einer Rotationsmatrix durch Einsetzen von $\theta$, $\phi$ und ø in die folgende Gleichung:

$$M = \begin{pmatrix} \cos\emptyset & \sin\emptyset & 0 \\ -si\emptyset & \cos\emptyset & 0 \\ 0 & 0 & 1 \end{pmatrix} \begin{pmatrix} \cos\varphi & 0 & -\sin\varphi \\ 0 & 1 & 0 \\ \sin\varphi & 0 & \cos\varphi \end{pmatrix} \begin{pmatrix} 1 & 0 & 0 \\ 0 & \cos\theta & \sin\theta \\ 0 & -\sin\theta & \cos\theta \end{pmatrix};$$

T3: Multiplizieren der erhaltenen Drei-Achsen-Beschleunigungsausgänge $A_X$, $A_Y$, und $A_Z$ mit der Rotationsmatrix, um Drei-Achsen-Beschleunigungsausgänge $A'_X, A'_Y$, und $A'_Z$ in einem geodätischen Koordinatensystem zu erhalten;

$$\begin{pmatrix} A'_X \\ A'_Y \\ A'_Z \end{pmatrix} = M * \begin{pmatrix} A_X \\ A_Y \\ A_Z \end{pmatrix};$$

und

T4: Berechnen eines Rollwerts, eines Nickwerts und eines Gierwerts basierend auf den Drei-Achsen-Beschleunigungsausgängen $A'_X, A'_Y$, und $A'_Z$ .

**3.** Neigungskompensationsverfahren nach Anspruch 1 oder 2, wobei Schritt S2 das Ausrichten der Säulenzellen-Wägezelle gemäss verschiedenen spezifizierten Neigungswinkeln und verschiedenen spezifizierten Horizontalrotationswinkeln sowie das Messen von Gewichten, Neigungswinkeln und Horizontalrotationswinkeln unter verschiedenen Lasten umfasst.

**4.** Neigungskompensationsverfahren nach Anspruch 3, **dadurch gekennzeichnet, dass** in Schritt S2 die spezifizierten Neigungswinkel 0° , 1° , 2° und 3° betragen, die spezifizierten Horizontalrotationswinkel 0° , 90° , 180° und 270° betragen und die Lasten Null, eine 1/2 Volllast und eine Volllast sind.

**5.** Neigungskompensationsverfahren nach Anspruch 4 oder 5, wobei das Gewicht, der Neigungswinkel und der Horizontalrotationswinkel für jede Ausrichtung der Wägezelle und für jede Last gemessen werden.

**6.** Neigungskompensationsverfahren nach einem der Ansprüche 1-5, **dadurch gekennzeichnet, dass** in Schritt S3 der Gewichtskompensationswert einen Neigungsfehler-Kompensationswert E1 und einen Rotationswinkelfehler-Kompensationswert E2 umfasst, und eine Berechnungsformel lautet:

$$E_1 = \frac{a_1 * (1 + \cos r)}{\cos r + c_1 * k * (1 - \cos r)} + \frac{a_2 * (1 + \cos p)}{\cos{}_2 * k * (1 - \cos p)};$$

$$E_2 = (b_0 + b_1 * \sin\vartheta + b_2 * \sin\vartheta^2);$$

wobei r einen Rollwert bezeichnet, p einen Nickwert bezeichnet,
$\vartheta$ einen Horizontalrotationswinkel bezeichnet,
$a_1$ und $c_1$ Verteilungskoeffizienten des Rollwerts bezeichnen,
$a_2$ und $c_2$ Verteilungskoeffizienten des Nickwerts bezeichnen,
k einen Strukturkoeffizienten der Säulenzellen-Wägezelle bezeichnet und
$b_0$, $b_1$, $b_2$ Rotationswinkelfehler-Kompensationswerte bezeichnen.

**7.** Neigungskompensationsverfahren nach Anspruch 6, **dadurch gekennzeichnet, dass** eine Berechnungsformel für das kompensierte Wägegewicht lautet:

$$W_c = \frac{W + E_2}{1 + E_1 / 10^6};$$

wobei $W_c$ das kompensierte Wägegewicht bezeichnet und W das tatsächliche gemessene Gewicht bezeichnet.

**8.** Neigungskompensationsverfahren nach einem der Ansprüche 1-7, **dadurch gekennzeichnet, dass** vor der Durchführung von Schritt S4 der Gewichtskompensationswert verifiziert wird.

9. Neigungskompensationsvorrichtung (200), anwendbar auf ein Wägesystem mit einer Säulenkompressions-Wägezelle, **dadurch gekennzeichnet, dass** sie umfasst:

ein Kalibrierungsmodul (201), das dafür konfiguriert ist, eine Neigungswinkelkalibrierung und eine Horizontalrotationswinkelkalibrierung an der Wägezelle des Wägesystems durchzuführen, um Kalibrierungsdaten zu erhalten;

ein Testmodul (202), das dafür konfiguriert ist, einen eingestellten spezifizierten Neigungswinkel und einen eingestellten spezifizierten Horizontalrotationswinkel auszuwählen und ein unter Last gemessenes Gewicht, einen Neigungswinkel und einen Horizontalrotationswinkel zu erhalten;

ein Kompensationswert-Berechnungsmodul (201), das dafür konfiguriert ist, einen Gewichtskompensationswert basierend auf dem durch das Testmodul (202) erhaltenen Gewicht, Neigungswinkel und Horizontalrotationswinkel zu berechnen; und

ein Wägeberechnungsmodul (204), das dafür konfiguriert ist, ein tatsächliches Wägegewicht basierend auf einem tatsächlichen gemessenen Gewicht des Wägesystems und dem Gewichtskompensationswert zu berechnen,

**dadurch gekennzeichnet, dass** das Testmodul (202) dafür konfiguriert ist, verschiedene eingestellte spezifizierte Neigungswinkel und verschiedene eingestellte spezifizierte Horizontalrotationswinkel auszuwählen und unter verschiedenen Lasten gemessene Gewichte, Neigungswinkel und Horizontalrotationswinkel zu erhalten.

10. Neigungskompensationsvorrichtung nach Anspruch 9, **dadurch gekennzeichnet, dass** das Testmodul (202) dafür konfiguriert ist, die spezifizierten Neigungswinkel 0°, 1°, 2° und 3°, die spezifizierten Horizontalrotationswinkel 0°, 90°, 180° und 270° sowie die Lasten Null, 1/2 Volllast und eine Volllast auszuwählen.

11. Neigungskompensationsvorrichtung nach Anspruch 9 oder 10, wobei das Testmodul (202) dafür konfiguriert ist, einen eingestellten spezifizierten Neigungswinkel, einen eingestellten spezifizierten Horizontalrotationswinkel und eine eingestellte Last auszuwählen, um ein Gewicht, einen Neigungswinkel und einen Horizontalrotationswinkel zu erhalten, und alle spezifizierten Neigungswinkel, spezifizierten Horizontalrotationswinkel und Lasten zu durchlaufen (traversieren), um die entsprechenden Gewichte, Neigungswinkel und Horizontalrotationswinkel zu erhalten.

12. Neigungskompensationsvorrichtung nach einem der Ansprüche 9-11, **dadurch gekennzeichnet, dass** sie ferner ein Verifizierungsmodul (205) umfasst, das dafür konfiguriert ist, den durch das Kompensationswert-Berechnungsmodul (203) berechneten Gewichtskompensationswert zu verifizieren.

## Revendications

1. Procédé de compensation d'inclinaison applicable à un système de pesage présentant une cellule de pesage de compression en colonne, comprenant les étapes suivantes consistant à :

S1 : effectuer un étalonnage d'angle d'inclinaison et un étalonnage d'angle de rotation horizontale sur la cellule de pesage du système de pesage ;

S2 : aligner la cellule de pesage selon un angle d'inclinaison spécifié et un angle de rotation horizontale spécifié, et mesurer un poids, d'un angle d'inclinaison et d'un angle de rotation horizontale sous une charge ;

S3 : calculer une valeur de compensation de poids sur la base de l'angle d'inclinaison spécifié et de l'angle de rotation horizontale spécifié, ainsi que sur le poids, l'angle d'inclinaison et l'angle de rotation horizontale mesurés ; et

S4 : calculer un poids de pesage réel sur la base d'un poids mesuré réel du système de pesage et de la valeur de compensation de poids,

**caractérisé en ce que**

à l'étape S1, l'étalonnage d'angle d'inclinaison est effectué à l'aide d'un accéléromètre ou d'un capteur d'angle d'inclinaison, et l'étalonnage d'angle de rotation horizontale est effectué à l'aide d'un magnétomètre.

2. Procédé de compensation d'inclinaison selon la revendication 1, **caractérisé en ce que**, à l'étape S1, l'étalonnage d'angle d'inclinaison est effectué à l'aide d'un accéléromètre, dans lequel la réalisation de l'étalonnage d'angle d'inclinaison à l'aide de l'accéléromètre comprend en outre les étapes suivantes consistant à :

T1 : obtenir des sorties d'accélération sur trois axes $A_{X0}$, $A_{Y0}$ et $A_{Z0}$, et calculer $\theta$, $\phi$ et ø d'un alignement actuel à l'aide de l'équation suivante :

$$\theta = \tan^{-1}\left(\frac{A_{Y0}}{\sqrt{A_{X0}^2+A_{Z0}^2}}\right);$$

$$\varphi = \tan^{-1}\left(\frac{A_{X0}}{\sqrt{A_{Y0}^2+A_{Z0}^2}}\right);$$

$$\emptyset = \tan^{-1}\left(\frac{\sqrt{A_{Y0}^2+A_{X0}^2}}{A_{Z0}}\right);$$

T2 : calculer une matrice de rotation en substituant $\theta$ , $\phi$ et ø dans l'équation suivante :

$$M = \begin{pmatrix} \cos\emptyset & \sin\emptyset & 0 \\ -\sin\emptyset & \cos\emptyset & 0 \\ 0 & 0 & 1 \end{pmatrix}\begin{pmatrix} \cos\varphi & 0 & -\sin\varphi \\ 0 & 1 & 0 \\ \sin\varphi & 0 & \cos\varphi \end{pmatrix}\begin{pmatrix} 1 & 0 & 0 \\ 0 & \cos\theta & \sin\theta \\ 0 & -\sin\theta & \cos\theta \end{pmatrix};$$

T3 : multiplier les sorties d'accélération sur trois axes obtenues $A_X$, $A_Y$, et $A_Z$ par la matrice de rotation afin d'obtenir des sorties d'accélération sur trois axes $A_X'$, $A_Y'$, et $A_Z'$ dans un système de coordonnées géodésiques ;

$$\begin{pmatrix} A_X' \\ A_Y' \\ A_Z' \end{pmatrix} = M * \begin{pmatrix} A_X \\ A_Y \\ A_Z \end{pmatrix};$$

et

T4 : calculer une valeur de roulis, une valeur de tangage et une valeur de lacet sur la base des sorties d'accélération sur trois axes $A_X'$, $A_Y'$, et $A_Z'$.

3. Procédé de compensation d'inclinaison selon la revendication 1 ou 2, dans lequel l'étape S2 comprend l'alignement de la cellule de pesage de type colonne selon différents angles d'inclinaison spécifiés et différents angles de rotation horizontale spécifiés, et la mesure de poids, d'angles d'inclinaison et d'angles de rotation horizontale sous différentes charges.

4. Procédé de compensation d'inclinaison selon la revendication 3, **caractérisé en ce que**, à l'étape S2, les angles d'inclinaison spécifiés sont de 0 ° , 1 ° , 2 ° et 3 ° , les angles de rotation horizontale spécifiques sont de 0 ° , 90 ° , 180 ° et 270 ° , et les charges sont nulles, une demi-charge et une charge complète.

5. Procédé de compensation d'inclinaison selon la revendication 4 ou 5, dans lequel le poids, l'angle d'inclinaison et l'angle de rotation horizontale sont mesurés pour chaque alignement de la cellule de pesage et pour chaque charge.

6. Procédé de compensation d'inclinaison selon l'une quelconque des revendications 1 à 5, **caractérisé en ce que**, à l'étape S3, la valeur de compensation de poids comprend une valeur de compensation d'erreur d'inclinaison E1 et une valeur de compensation d'erreur d'angle de rotation E2, et une formule de calcul est la suivante :

$$E_1 = \frac{a_1*(1+\cos r)}{\cos r + c_1*k*(1-\cos r)} + \frac{a_2*(1+\cos p)}{\cos_{2}*k*(1-\cos p)};$$

$$E_2 = (b_0 + b_1 * \sin\vartheta + b_2 * \sin\vartheta^2);$$

dans lequel r désigne une valeur de roulis, p désigne une valeur de tangage,
$\vartheta$ désigne un angle de rotation horizontale,
$a_1$ et $c_1$ désignent des coefficients de distribution de la valeur de roulis,
$a_2$ et $c_2$ désignent des coefficients de distribution de la valeur de tangage,
k désigne un coefficient structurel de la cellule de pesage de type colonne, et
$b_0$, $b_1$, $b_2$ désignent des valeurs de compensation d'erreur d'angle de rotation.

7. Procédé de compensation d'inclinaison selon la revendication 6, **caractérisé en ce qu'**une formule de calcul du poids de pesage compensé est la suivante :

$$W_c = \frac{W+E_2}{1+E_1/10^6} \; ;$$

dans lequel $W_c$ désigne le poids de pesage compensé, et W désigne le poids mesuré réel.

8. Procédé de compensation d'inclinaison selon l'une quelconque des revendications 1 à 7, **caractérisé en ce que**, avant l'exécution de l'étape S4, la valeur de compensation de poids est vérifiée.

9. Appareil de compensation d'inclinaison (200) applicable à un système de pesage présentant une cellule de pesage, **caractérisé en ce qu'**il comprend :

un module d'étalonnage (201) configuré pour effectuer un étalonnage d'angle d'inclinaison et un étalonnage d'angle de rotation horizontale sur la cellule de pesage du système de pesage afin d'obtenir des données d'étalonnage ;
un module de test (202) configuré pour sélectionner un angle d'inclinaison spécifié défini et un angle de rotation horizontale spécifié défini, et pour obtenir un poids, un angle d'inclinaison et un angle de rotation horizontale mesurés sous une charge ;
un module de calcul de valeur de compensation (201) configuré pour calculer une valeur de compensation de poids sur la base du poids, de l'angle d'inclinaison et de l'angle de rotation horizontale obtenus par le module de test (202) ; et
un module de calcul de pesage (204) configuré pour calculer un poids de pesage réel sur la base d'un poids mesuré réel du système de pesage et de la valeur de compensation de poids,
**caractérisé en ce que** le module de test (202) est configuré pour sélectionner différents angles d'inclinaison spécifiés définis et différents angles de rotation horizontale spécifiés définis et pour obtenir des poids, des angles d'inclinaison et des angles de rotation horizontale mesurés sous différentes charges.

10. Appareil de compensation d'inclinaison selon la revendication 9, **caractérisé en ce que** le module de test (202) est configuré pour sélectionner les angles d'inclinaison spécifiés de 0 °, 1 °, 2 ° et 3 °, les angles de rotation horizontale spécifiés de 0 °, 90 °, 180 ° et 270 °, et les charges nulles, une demi-charge et une charge complète.

11. Appareil de compensation d'inclinaison selon la revendication 9 ou 10, dans lequel le module de test (202) est configuré pour sélectionner un angle d'inclinaison spécifié défini, un angle de rotation horizontale spécifié défini et une charge définie, pour obtenir un poids, un angle d'inclinaison et un angle de rotation horizontale, et pour parcourir tous les angles d'inclinaison spécifiés, tous les angles de rotation horizontale spécifiés et toutes les charges afin d'obtenir les poids, les angles d'inclinaison et les angles de rotation horizontale correspondants.

12. Appareil de compensation d'inclinaison selon l'une quelconque des revendications 9 à 11, **caractérisé en ce qu'**il comprend en outre un module de vérification (205) configuré pour vérifier la valeur de compensation de poids calculée par le module de calcul de valeur de compensation (203).

```
            ┌─────────────┐
            │    Start    │
            └─────────────┘
                   │
                   ▼
┌──────────────────────────────────────┐  ┌─ S1
│  Perform tilt angle calibration and  │ /
│ rotation angle calibration on a      │
│ column-type load cell of a weighing  │
│ system                               │
└──────────────────────────────────────┘
                   │
                   ▼
┌──────────────────────────────────────┐  ┌─ S2
│  Select to set different specified   │ /
│ tilt angles and different specified  │
│ horizontal rotation angles, and      │
│ measure weights, tilt angles, and    │
│ horizontal rotation angles under     │
│ different loads                      │
└──────────────────────────────────────┘
                   │
                   ▼
┌──────────────────────────────────────┐  ┌─ S3
│ Calculate a weight compensation      │ /
│ value based on the set specified     │
│ tilt angles and the set specified    │
│ horizontal rotation angles as well   │
│ as the weights, tilt angles, and     │
│ horizontal rotation angles obtained  │
│ through measurement                  │
└──────────────────────────────────────┘
                   │
                   ▼
┌──────────────────────────────────────┐  ┌─ S4
│ Calculate an actual weighing weight  │ /
│ based on an actual measured weight   │
│ of the weighing system and the       │
│ weight compensation value            │
└──────────────────────────────────────┘
                   │
                   ▼
            ┌─────────────┐
            │     End     │
            └─────────────┘
```

*FIG. 1*

200

201

202

203

204

205

*FIG. 2*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102778287 A
- EP 2246675 A1
- EP 1985977 A1
- TW 200918871 A